# EUROPÄISCHE PATENTSCHRIFT

(11) **EP 2 780 190 B1**
(45) Veröffentlichungstag und Bekanntmachung des Hinweises auf die Patenterteilung: **19.10.2016**
(21) Anmeldenummer: 12756759.2
(22) Anmeldetag: 13.09.2012
(51) Int. Cl.: B60N 2/015, B60N 2/68, F16B 5/02, F16B 21/02

(54) **VERFAHREN UND BEFESTIGUNGSELEMENT ZUR MONTAGE EINES FAHRZEUGSITZES**
METHOD AND ATTACHMENT ELEMENT FOR MOUNTING A VEHICLE SEAT
PROCÉDÉ ET ÉLÉMENT DE FIXATION POUR LE MONTAGE D'UN SIÈGE POUR VÉHICULE

(30) Priorität: 16.11.2011 DE 102011086504; 21.02.2012 DE 102012202654
(43) Veröffentlichungstag der Anmeldung: 24.09.2014
(73) Patentinhaber: Johnson Controls Metals and Mechanisms GmbH & Co. KG, 42699 Solingen (DE)
(72) Erfinder: MILDT, Helmut, Richard, 51789 Lindlar (DE); KLIMARS, Dieter, 53894 Mechernich (DE)
(74) Vertreter: Finger, Catrin
(86) Internationale Anmeldenummer: PCT/EP2012/067951
(87) Internationale Veröffentlichungsnummer: WO 2013/072090

(56) Entgegenhaltungen:
- DE-U1-202005 010 873
- DE-U1-202007 008 152

## Beschreibung

Die Erfindung betrifft ein Befestigungselement zur Montage eines Fahrzeugsitzes an einer Fahrzeugstruktur gemäß dem Oberbegriff des Anspruchs 1. Weiterhin betrifft die Erfindung ein Verfahren zur Montage eines Fahrzeugsitzes an einer Fahrzeugstruktur gemäß dem Oberbegriff des Anspruchs 7.

Aus dem Stand der Technik sind zahlreiche unterschiedliche Befestigungselemente zur Montage eines Fahrzeugsitzes an einer Fahrzeugstruktur bekannt, beispielsweise herkömmliche Schrauben. Weiterhin sind zahlreiche Befestigungsverfahren, beispielsweise mittels Steck- und/oder Rastverbindungen, bekannt.

Aus DE 10 2008 062 894 A1, DE 10 2006 030 029 A1 und FR 2 135 463 A2 sind Befestigungselemente zum axialen Toleranzausgleich bei der Montage zweier Bauteile bekannt.

Die DE 20 2005 010 873 U1 beschreibt eine Toleranzausgleichsanordnung zum selbsttätigen Ausgleichen von Toleranzen im Abstand zwischen zwei miteinander zu verspannenden Bauteilen, bestehend aus einer Befestigungsschraube, die mindestens einen Mitnehmervorsprung hat, einem Aufnahmeteil, das an einem ersten der beiden Bauteile festlegbar ist und mit dem die Befestigungsschraube zum Verspannen der Bauteile verschraubbar ist, und einer Verstellbuchse, die an dem Aufnahmeteil über rampenförmige Gleitflächen abgestützt ist und die mindestens einen Mitnehmervorsprung hat, der mit dem Mitnehmervorsprung der Befestigungsschraube so zusammenwirkt, dass die Verstellbuchse beim Einschrauben der Befestigungsschraube in das Aufnahmeteil von der Befestigungsschraube mitgeschleppt und aufgrund einer entsprechenden Relativbewegung der rampenförmigen Gleitflächen in Anlage mit dem zweiten Bauteil für den Toleranzausgleich bewegt wird.

Aus der DE 20 2007 008 152 U1 ist eine Befestigungseinrichtung zum Befestigen eines Bauteils B an einem Bauteil A mit selbsttätigem Ausgleich von Toleranzen im Abstand zwischen dem Bauteil B und dem Bauteil A bekannt, bestehend aus einem Aufnahmeelement und einem Verstellelement, das über eine erste Gewindepaarung, einer ersten Gangrichtung mit dem Aufnahmeelement verschraubbar ist, und einer Befestigungsschraube, die über eine zweite Gewindepaarung einer entgegengesetzten zweiten Gangrichtung in das Aufnahmeelement einschraubbar und mit dem Verstellelement durch eine lösbare Mitschleppverbindung verbindbar ist, um beim Drehen der Befestigungsschraube das Verstellelement mitzudrehen und dadurch zwecks Toleranzausgleich in Anlage mit dem Bauteil B zu bewegen, während das Aufnahmeelement unterhalb eines Flansches mindestens einen radial vorstehenden Haltevorsprung aufweist, so dass das Aufnahmeelement durch form- und/oder kraftschlüssiges Halten des Bauteils A zwischen dem Flansch und dem mindestens einen Haltevorsprung am Bauteil A festlegbar ist.

Aufgabe der vorliegenden Erfindung ist es, ein verbessertes Verfahren und ein verbessertes Befestigungselement zur Montage eines Fahrzeugsitzes an einer Fahrzeugstruktur anzugeben.

Hinsichtlich des Befestigungselements zur Montage eines Fahrzeugsitzes an einer Fahrzeugstruktur wird die Aufgabe durch die im Anspruch 1 angegebenen Merkmale gelöst.

Hinsichtlich des Verfahrens zur Montage eines Fahrzeugsitzes an einer Fahrzeugstruktur wird die Aufgabe durch die im Anspruch 7 angegebenen Merkmale gelöst.

Vorteilhafte Weiterbildungen der Erfindung sind Gegenstand der Unteransprüche.

Das Befestigungselement zur Montage eines Fahrzeugsitzes an einer Fahrzeugstruktur umfasst erfindungsgemäß eine Hülse, an derem einen Ende ein Hebelelement angeordnet ist, und ein im Wesentlichen hohlzylinderartig ausgebildetes Element, welches zumindest zwei einander gegenüberliegende flügelartige Erweiterungen umfasst und die Hülse zumindest abschnittsweise umgibt. Ein solches Befestigungselement ermöglicht somit vorteilhafterweise einen Toleranzausgleich bei der Befestigung des Fahrzeugsitzes sowohl in Fahrzeugquerachse, Fahrzeughochachse und/oder Fahrzeuglängsachse.

Erfindungsgemäß ist das hohlzylinderartig ausgebildete Element mittels zumindest zwei einander gegenüberliegenden Haltelaschen an der Hülse form- und/oder kraftschlüssig gehalten. Dadurch können das hohlzylinderartig ausgebildete Element und die Hülse als kosteneffizient herstellbare Blechprägeteile ausgebildet werden.

Besonders zweckmäßigerweise sind die Haltelaschen stirnseitig an der Hülse an- oder ausgeformt und in einem Winkel von 90 Grad oder nahezu 90 Grad in Bezug auf die Hülsenachse nach außen abgewinkelt.

In einer vorteilhaften Ausführungsform greifen die Haltelaschen formschlüssig in korrespondierende Aussparungen im hohlzylinderartig ausgebildeten Element ein und überragen das Element außenseitig. Dabei ermöglicht der Formschluss zwischen Haltelaschen und Aussparungen auf einfache Weise eine Verdrehsicherung zwischen hohlzylinderartig ausgebildetem Element und Hülse und die das hohlzylinderartig ausgebildete Element überragenden Abschnitte der Haltelaschen bilden eine Anschlagfläche aus.

In einer weiteren vorteilhaften Ausführungsform ist zwischen Hebelelement und dem hohlzylinderartig ausgebildeten Element ein Zwischenraum ausgebildet, welcher korrespondierend zu einer Materialstärke eines Halteelements des Fahrzeugsitzes ausgebildet ist.

In einer zweckmäßigen Ausführungsform sind zur form- und/oder kraftschlüssigen Anordnung des Hebelelements an der Hülse Abschnitte endseitig an der Hülse an- oder ausgeformt und in einem Winkel von 90 Grad oder nahezu 90 Grad in Bezug auf eine Hülsenachse nach außen abgewinkelt.

Das Hebelelement ist bevorzugt im Wesentlichen scheibenförmig ausgebildet und weist am Außenumfang eine hebelartige Erweiterung auf, mittels der es manuell oder automatisch rotierbar ist.

Beim Verfahren zur Montage eines Fahrzeugsitzes an einer Fahrzeugstruktur mittels zumindest eines Befestigungselements wird während der Anordnung oder Montage des Fahrzeugsitzes im Fahrzeug das Befestigungselement erfindungsgemäß in einer ersten Position angeordnet, in welcher ein hohlzylinderartig ausgebildetes Element mit flügelartigen Erweiterungen in einer korrespondierend ausgeformten Aussparung des Halteelements des Fahrzeugsitzes angeordnet ist, wobei Haltelaschen einer Hülse des Befestigungselements an einem Halteelement des Fahrzeugsitzes anliegen.

Zum Übergang von der ersten in eine zweite Position wird nach der Anordnung des Fahrzeugsitzes im Fahrzeug das Befestigungselement in Fahrzeugquerrichtung auf die Fahrzeugstruktur in die zweite Position verschoben, bis das Befestigungselement stirnseitig an der Fahrzeugstruktur anliegt, wobei das hohlzylinderartig ausgebildete Element mit den flügelartigen Erweiterungen vollständig aus der Aussparung des Halteelements des Fahrzeugsitzes herausbewegt wird, so dass sich die Aussparung im Zwischenraum zwischen Hebelelement und dem hohlzylinderartig ausgebildeten Element befindet und das Hebelelement zumindest abschnittsweise am Halteelement des Fahrzeugsitzes anliegt.

Aus der zweiten Position heraus wird das Befestigungselement mittels des Hebelelements manuell oder automatisch in eine dritte Position rotiert, wobei die flügelartigen Erweiterungen endseitig am Halteelement des Fahrzeugsitzes anliegen, so dass eine Rückbewegung des Befestigungselements in Fahrzeugquerrichtung verhindert ist.

Besonders vorteilhafterweise kann somit ein vorderseitig bereits an der Fahrzeugstruktur fixierter Fahrzeugsitz in einer Schwenkbewegung im Fahrzeug angeordnet und anschließend durch die Verschiebung des Befestigungselements in Fahrzeugquerrichtung an seinem hinteren Ende an der Fahrzeugstruktur befestigt werden.

Anhand der beigefügten schematischen Figuren wird die Erfindung näher erläutert.

Dabei zeigen:
- Figur 1: schematisch eine Seitenansicht einer Anordnung eines Fahrzeugsitzes an einer Fahrzeugstruktur,
- Figur 2: schematisch eine Detailansicht einer Anordnung eines Fahrzeugsitzes an einer Fahrzeugstruktur,
- Figur 3: schematisch eine weitere Detailansicht einer Anordnung eines Fahrzeugsitzes an einer Fahrzeugstruktur,
- Figur 4: schematisch eine Seitenansicht eines in einem Halteelement eines Fahrzeugsitzes in einer ersten Position angeordneten Befestigungselements,
- Figur 5: schematisch eine perspektivische Darstellung eines in einem Halteelement eines Fahrzeugsitzes in einer zweiten Position angeordneten Befestigungselements,
- Figur 6: schematisch eine perspektivische Darstellung eines in einem Halteelement eines Fahrzeugsitzes in einer dritten Position angeordneten Befestigungselements,
- Figur 7: schematisch eine Stirnansicht eines in einem Halteelement eines Fahrzeugsitzes in einer dritten Position angeordneten Befestigungselements,
- Figur 8: schematisch eine Seitenansicht eines in einem Halteelement eines Fahrzeugsitzes in einer zweiten Position angeordneten Befestigungselements und
- Figur 9: schematisch eine perspektivische Darstellung eines mittels eines Befestigungsmittels an Fahrzeugstruktur und Haltelement fixierten Befestigungselements.

Einander entsprechende Teile sind in allen Figuren mit den gleichen Bezugszeichen versehen.

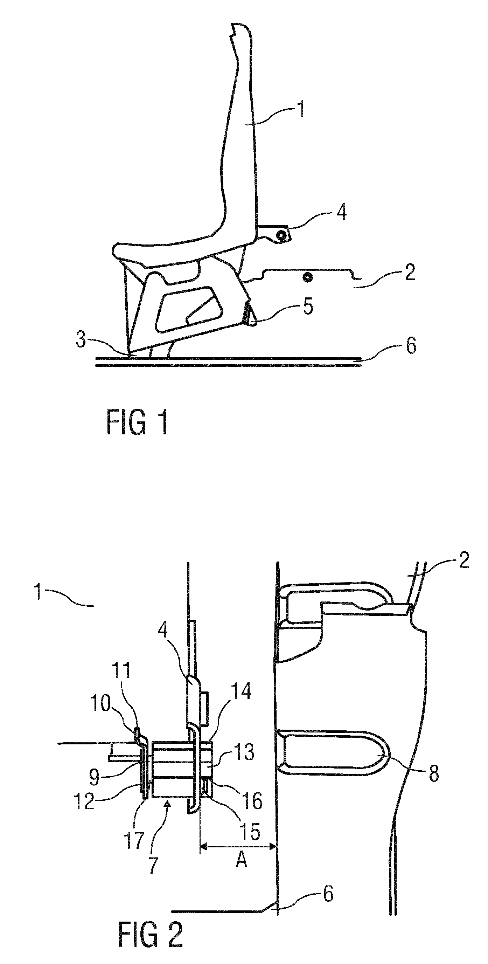

Figur 1 zeigt schematisch eine Seitenansicht einer Anordnung eines Fahrzeugsitzes 1 an einer Fahrzeugstruktur 2. Ein solcher herkömmlicher Fahrzeugsitz wird während der Montage im Fahrzeug an seinem vorderen Ende 3 in herkömmlicher Weise an der Fahrzeugstruktur 2 fixiert. Anschließend wird ein hinteres Ende des Fahrzeugsitzes 1, welches bevorzugt von einem Halteelement 4 gebildet ist, in Montageposition geschwenkt, so dass ein hinterer Fußabschnitt 5 an einem Fahrzeugboden 6 anliegt.

Um diese Schwenkbewegung des Fahrzeugsitzes 1 während der Montage nicht zu behindern oder erst zu ermöglichen, ist zwischen Fahrzeugstruktur 2 und Halteelement 4 ein vorgebbarer Abstand A ausgebildet.

Figur 2 zeigt schematisch eine Detailansicht einer Anordnung des Fahrzeugsitzes 1 an der Fahrzeugstruktur 2. Dabei ist zum Ausgleich des Abstands A zwischen Fahrzeugstruktur 2 und Halteelement 4 ein erfindungsgemäßes Befestigungselement 7 im Halteelement 4 des Fahrzeugsitzes 1 angeordnet und das Befestigungselement 7 ist in einer ersten Position angeordnet.

Das Befestigungselement 7 umfasst eine Hülse 9, an derem einen Ende ein Hebelelement 10 angeordnet ist. Das Hebelelement 10 ist dabei im Wesentlichen scheibenförmig ausgebildet und weist am Außenumfang eine hebelartige Erweiterung 11 auf.

Das Hebelelement 10 ist form- und/oder kraftschlüssig an der Hülse 9 angeordnet, wozu beispielweise entsprechende Abschnitte 12 endseitig an der Hülse 9 an- oder ausgeformt und in einem Winkel von 90 Grad oder nahezu 90 Grad in Bezug auf die Hülsenachse nach außen abgewinkelt sind.

Am anderen Ende der Hülse 9 ist ein im Wesentlichen hohlzylinderartig ausgebildetes Element 13 angeordnet. Dieses Element 13 umgibt die Hülse 9 zumindest abschnittsweise. Weiterhin sind am hohlzylinderartig ausgebildeten Element 13 zwei einander gegenüberliegende flügelartige Erweiterungen 14 ausgebildet.

Dabei ist das hohlzylinderartig ausgebildete Element 13 mittels zwei einander gegenüberliegenden Haltelaschen 15 an der Hülse 9 form- und/oder kraftschlüssig gehalten. Diese Haltelaschen 15 sind stirnseitig an der Hülse 9 an- oder ausgeformt und in einem Winkel von 90 Grad oder nahezu 90 Grad in Bezug auf die Hülsenachse nach außen abgewinkelt. Dabei greifen die Haltelaschen 15 in korrespondierende Aussparungen 16 im hohlzylinderartig ausgebildeten Element 13 ein und überragen das Element 13 außenseitig.

Zwischen Hebelelement 10 und dem hohlzylinderartig ausgebildeten Element 13 ist ein Zwischenraum 17 ausgebildet, welcher korrespondierend zu einer Materialstärke des Halteelements 4 des Fahrzeugsitzes 1 ausgebildet ist.

Während der Montage des Fahrzeugsitzes an der Fahrzeugstruktur 2 ist das Befestigungselement 7 in einer ersten Position angeordnet, in welcher das hohlzylinderartig ausgebildete Element 13 mit den flügelartigen Erweiterungen 14 in einer korrespondierend ausgeformten Aussparung 19 des Halteelements 4 des Fahrzeugsitzes 1 angeordnet ist. In der ersten Position liegen die Haltelaschen 15 der Hülse 9 am Halteelement 4 des Fahrzeugsitzes 1 an.

In der Fahrzeugstruktur 2 ist ein Befestigungsabschnitt 8 ausgebildet, welcher beispielsweise als herkömmlicher Gewindeabschnitt ausgeformt ist.

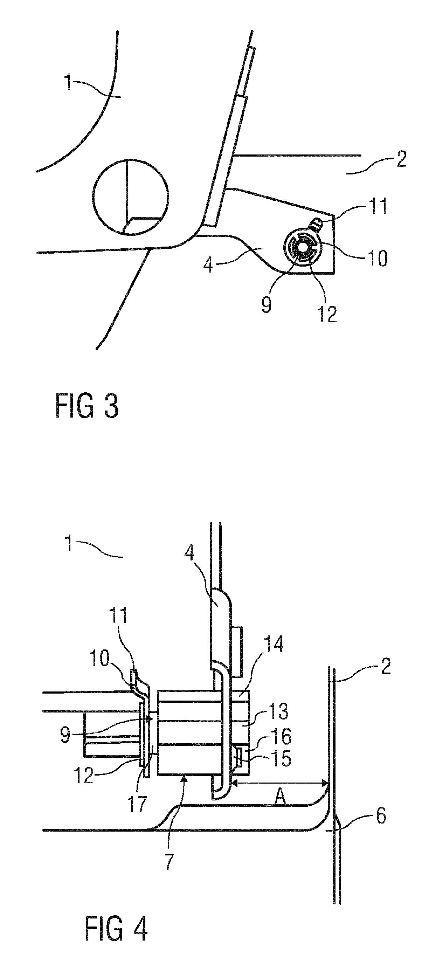

Figur 3 zeigt schematisch eine weitere Detailansicht einer Anordnung des Fahrzeugsitzes 1 an der Fahrzeugstruktur 2.

Figur 4 zeigt schematisch eine Seitenansicht des im Halteelement 4 des Fahrzeugsitzes 1 in einer ersten Position angeordneten Befestigungselements 7.

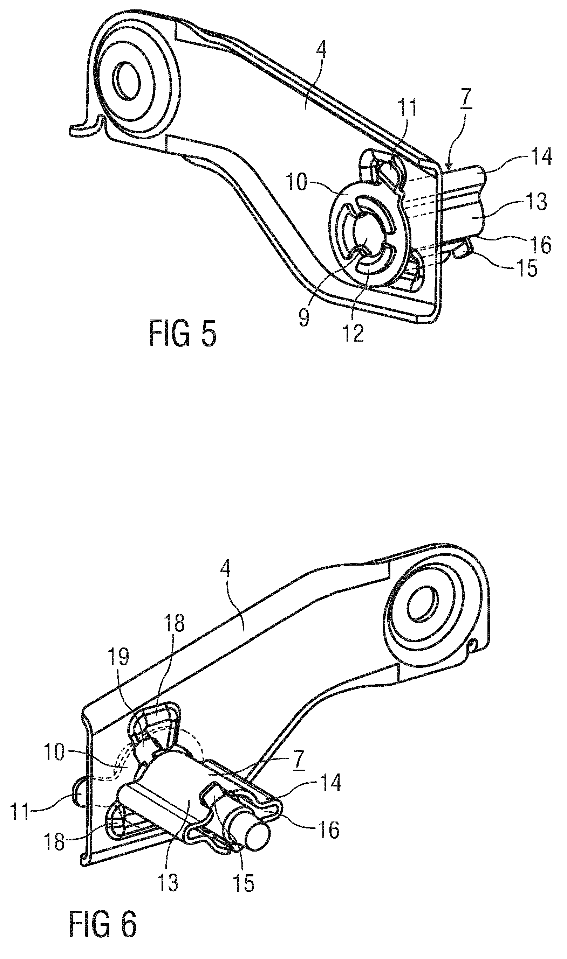

Figur 5 zeigt schematisch eine perspektivische Darstellung des im Halteelement 4 des Fahrzeugsitzes 1 in einer zweiten Position angeordneten Befestigungselements 7. Zum Übergang von der ersten Position in die zweite Position wird das Befestigungselement 7 in Fahrzeugquerrichtung in Richtung auf die Fahrzeugstruktur 2 verschoben, so dass das Hebelelement 10 am Halteelement 4 des Fahrzeugsitzes 1 anliegt. Somit ist das hohlzylinderartig ausgebildete Element 13 vollständig aus der korrespondierend ausgeformten Aussparung 19 des Halteelements 4 des Fahrzeugsitzes 1 herausbewegt und liegt stirnseitig bevorzugt an der Fahrzeugstruktur 2 an. Dabei ist die Aussparung des Halteelements 4 des Fahrzeugsitzes 1 im Zwischenraum 17 zwischen Hebelelement 10 und dem hohlzylinderartig ausgebildeten Element 13 angeordnet.

Figur 6 zeigt schematisch eine perspektivische Darstellung des im Halteelement 4 des Fahrzeugsitzes 1 in einer dritten Position angeordneten Befestigungselements 7. Zum Übergang in diese dritte Position wird das Befestigungselement 7 mittels des Hebelelements 10 rotiert. Dadurch werden die flügelartigen Erweiterungen 14 von den korrespondierenden Aussparungen 19 des Halteelements 4 des Fahrzeugsitzes 1 wegbewegt und liegen am Halteelement 4 an, so dass eine Rückbewegung des Befestigungselements 7 in Fahrzeugquerrichtung verhindert ist. Dabei können am Halteelement 4 des Fahrzeugsitzes 1 Halteabschnitte 18 ausgebildet sein, welche einen Rotationswinkel des Befestigungselements 7 vorgeben. Solche Halteabschnitte 18 können beispielsweise als herkömmliche Prägungen ausgebildet sein.

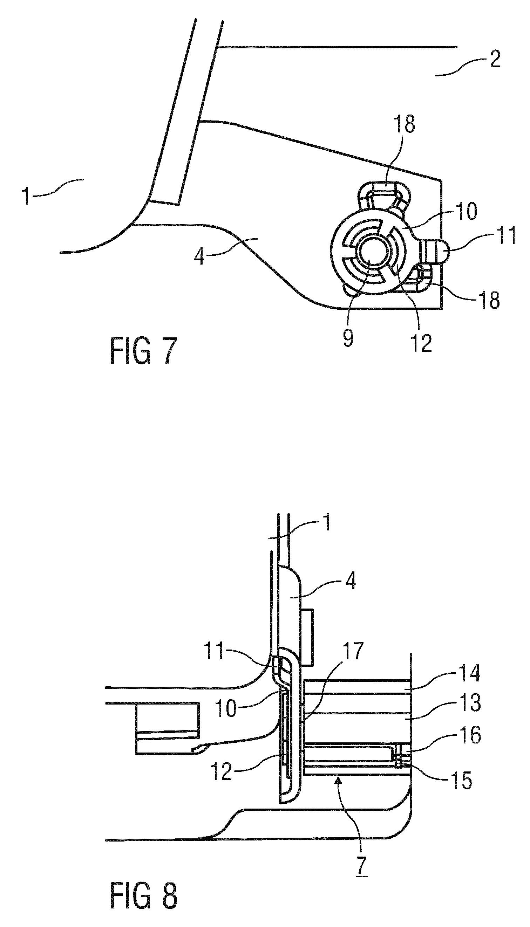

Figur 7 zeigt schematisch eine Stirnansicht des im Halteelement 4 des Fahrzeugsitzes 1 in einer dritten Position angeordneten Befestigungselements 7.

Figur 8 zeigt schematisch eine Seitenansicht des im Halteelement 4 des Fahrzeugsitzes 1 in einer zweiten Position angeordneten Befestigungselements 7, welches stirnseitig an der Fahrzeugstruktur 2 anliegt.

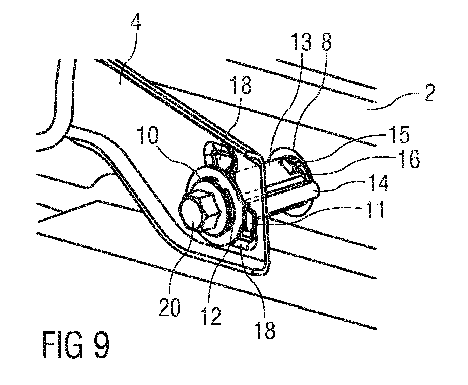

Figur 9 zeigt schematisch eine perspektivische Darstellung des mittels eines Befestigungsmittels 20 an Fahrzeugstruktur 2 und Haltelement 4 fixierten Befestigungselements 7. Dabei wird in das in die dritte Position rotierte Befestigungselement 7 ein herkömmliches, korrespondierend ausgeformtes Befestigungsmittel 20, beispielsweise eine Schraube, eingeführt und in den Befestigungsabschnitt 8 der Fahrzeugstruktur 2 geschraubt.

Mittels des Befestigungsmittels 20 wird das hohlzylinderartig ausgebildete Element 13 somit endseitig zwischen Fahrzeugstruktur 2 und Haltelement 4 des Fahrzeugsitzes 1 verpresst, da das hohlzylinderartig ausgebildete Element 13 mit seiner einen Stirnseite am Haltelement 4 und mit seiner anderen Stirnseite an der Fahrzeugstruktur 2 anliegt.

In nicht näher dargestellter Art und Weise ist das Befestigungselement 7 in der dritten Position in Fahrzeughochachse und/oder Fahrzeuglängsachse verschiebbar. Beispielsweise ist ein Durchmesser der Aussparung 16 im Haltelement 4 gegenüber einem Außendurchmesser der Hülse 9 vergrößert, so dass die Hülse 9 in der Aussparung 16 verschiebbar ist.

Das Befestigungselement 7 ermöglicht somit vorteilhafterweise einen Toleranzausgleich bei der Befestigung des Fahrzeugsitzes 1 sowohl in Fahrzeugquerachse, Fahrzeughochachse und/oder Fahrzeuglängsachse.

### Bezugszeichenliste

- 1: Fahrzeugsitz
- 2: Fahrzeugstruktur
- 3: vorderes Ende
- 4: Halteelement
- 5: Fußabschnitt
- 6: Fahrzeugboden
- 7: Befestigungselement
- 8: Befestigungsabschnitt
- 9: Hülse
- 10: Hebelelement
- 11: hebelartige Erweiterung
- 12: Abschnitt
- 13: hohlzylinderartig ausgebildeter Element
- 14: flügelartige Erweiterung
- 15: Haltelasche
- 16: Aussparung
- 17: Zwischenraum
- 18: Halteabschnitte
- 19: Aussparung
- 20: Befestigungsmittel
- A: Abstand

## Patentansprüche

1. Befestigungselement (7) zur Montage eines Fahrzeugsitzes (1) an einer Fahrzeugstruktur (2),
umfassend eine Hülse (9), an deren einem Ende ein Hebelelement (10) angeordnet ist, und ein im Wesentlichen hohlzylinderartig ausgebildetes Element (13), welches die Hülse (9) zumindest abschnittsweise umgibt, **dadurch gekennzeichnet, dass** das hohlzylinderartig ausgebildete Element (13) zumindest zwei einander gegenüberliegende flügelartige Erweiterungen umfasst und mittels zumindest zwei einander gegenüberliegenden Haltelaschen (15) an der Hülse (9) form- und/oder kraftschlüssig gehalten ist, so dass während der Anordnung oder Montage des Fahrzeugsitzes (1) im Fahrzeug das Befestigungselement (7) in einer ersten Position anordbar ist, in welcher das hohlzylinderartig ausgebildete Element (13) mit den flügelartigen Erweiterungen (14) in einer korrespondierend ausgeformten Aussparung (19) eines Halteelements (4) des Fahrzeugsitzes (1) anordbar ist, wobei Haltelaschen (15) einer Hülse (9) des Befestigungselements (7) an einem Halteelement (4) des Fahrzeugsitzes (1) anliegen.

2. Befestigungselement (7) nach Anspruch 1,
**dadurch gekennzeichnet, dass** die Haltelaschen (15) stirnseitig an der Hülse (9) an- oder ausgeformt und in einem Winkel von 90 Grad oder nahezu 90 Grad in Bezug auf die Hülsenachse nach außen abgewinkelt sind.

3. Befestigungselement (7) nach einem der vorherigen Ansprüche,
**dadurch gekennzeichnet, dass** die Haltelaschen (15) formschlüssig in korrespondierende Aussparungen (16) im hohlzylinderartig ausgebildeten Element (13) eingreifen und das Element (13) außenseitig überragen.

4. Befestigungselement (7) nach einem der vorherigen Ansprüche,
**dadurch gekennzeichnet, dass** zwischen Hebelelement (10) und dem hohlzylinderartig ausgebildeten Element (13) ein Zwischenraum (17) ausgebildet ist, welcher korrespondierend zu einer Materialstärke eines Halteelements (4) des Fahrzeugsitzes (1) ausgebildet ist.

5. Befestigungselement (7) nach einem der vorherigen Ansprüche,
**dadurch gekennzeichnet, dass** zur form- und/oder kraftschlüssigen Anordnung des Hebelelements (10) an der Hülse (9) Abschnitte (12) endseitig an der Hülse (9) an- oder ausgeformt und in einem Winkel von 90 Grad oder nahezu 90 Grad in Bezug auf eine Hülsenachse nach außen abgewinkelt sind.

6. Befestigungselement (7) nach einem der vorherigen Ansprüche,
**dadurch gekennzeichnet, dass** das Hebelelement (10) im Wesentlichen scheibenförmig ausgebildet ist und am Außenumfang eine hebelartige Erweiterung (11) aufweist.

7. Verfahren zur Montage eines Fahrzeugsitzes (1) an einer Fahrzeugstruktur (2) mittels zumindest eines Befestigungselements (7) nach einem der Ansprüche 1 bis6,
**dadurch gekennzeichnet, dass** während der Anordnung oder Montage des Fahrzeugsitzes (1) im Fahrzeug das Befestigungselement (7) in einer ersten Position angeordnet wird, in welcher ein hohlzylinderartig ausgebildetes Element (13) mit flügelartigen Erweiterungen (14) in einer korrespondierend ausgeformten Aussparung (19) des Halteelements (4) des Fahrzeugsitzes (1) angeordnet ist, wobei Haltelaschen (15) einer Hülse (9) des Befestigungselements (7) an einem Halteelement (4) des Fahrzeugsitzes (1) anliegen.

8. Verfahren nach Anspruch7,
**dadurch gekennzeichnet, dass** nach der Anordnung des Fahrzeugsitzes (1) im Fahrzeug das Befestigungselement (7) in Fahrzeugquerrichtung auf die Fahrzeugstruktur (2) in eine zweite Position verschoben wird, bis das Befestigungselement (7) stirnseitig an der Fahrzeugstruktur (2) anliegt, wobei das hohlzylinderartig ausgebildete Element (13) mit den flügelartigen Erweiterungen (14) vollständig aus der Aussparung (19) des Halteelements (4) des Fahrzeugsitzes (1) herausbewegt wird, so dass sich die Aussparung (19) im Zwischenraum (17) zwischen Hebelelement (7) und dem hohlzylinderartig ausgebildeten Element (13) befindet und das Hebelelement (10) zumindest abschnittsweise am Halteelement (4) des Fahrzeugsitzes (1) anliegt.

9. Verfahren nach Anspruch 8,
**dadurch gekennzeichnet, dass** das Befestigungselement (7) aus der zweiten Position mittels des Hebelelements (10) manuell oder automatisch in eine dritte Position rotiert wird, wobei die flügelartigen Erweiterungen (14) endseitig am Halteelement (4) des Fahrzeugsitzes (1) anliegen, so dass eine Rückbewegung des Befestigungselements (7) in Fahrzeugquerrichtung verhindert ist.

## Claims

1. An attachment element (7) for mounting a vehicle seat (1) on a vehicle structure (2),
comprising a sleeve (9), at one end of which a lever element (10) is arranged, and an element (13) which is configured substantially in the manner of a hollow cylinder, which at least partially surrounds the sleeve (9),
**characterized in that** the element (13),configured in the manner of a hollow cylinder, comprises at least two wing-like extensions (14) opposing one another and is held positively and/or non-positively on the sleeve (9) by means of at least two retaining tabs (15) opposing one another so that, when arranging or mounting the vehicle seat (1) in the vehicle, the attachment element (7) is able to be arranged in a first position in which the element (13) configured in the manner of a hollow cylinder with the wing-like extensions (14) is able to be arranged in a correspondingly shaped recess (19) of a retaining element (4) of the vehicle seat (1), wherein retaining tabs (15) of a sleeve (9) of the attachment element (7) bear against a retaining element (4) of the vehicle seat (1).

2. The attachment element (7) as claimed in claim 1, **characterized in that** the retaining tabs (15) are integrally formed or shaped on the front face of the sleeve (9) and are bent back outwardly at an angle of 90 degrees or almost 90 degrees relative to the sleeve axis.

3. The attachment element (7) as claimed in one of the preceding claims, **characterized in that** the retaining tabs (15) engage positively in corresponding recesses (16) in the element (13) configured in the manner of a hollow cylinder and outwardly protrude over the element(13).

4. The attachment element (7) as claimed in one of the preceding claims, **characterized in that** an intermediate space (17) is formed between the lever element (10) and the element (13) configured in the manner of a hollow cylinder, said intermediate space being configured so as to correspond to a material thickness of a retaining element (4) of the vehicle seat (1).

5. The attachment element (7) as claimed in one of the preceding claims, **characterized in that** for the positive and/or non-positive arrangement of the lever element (10) on the sleeve (9), portions (12) are integrally formed or shaped on the end face of the sleeve (9) and are bent back outwardly at an angle of 90 degrees or almost 90 degrees relative to a sleeve axis.

6. The attachment element (7) as claimed in one of the preceding claims, **characterized in that** the lever element (10) is configured to be substantially disk-shaped and on the outer periphery has a lever-like extension (11).

7. A method for mounting a vehicle seat (1) on a vehicle structure (2) by means of at least one attachment element (7) as claimed in one of claims 1 to 6, **characterized in that**, when arranging or mounting the vehicle seat (1) in the vehicle, the attachment element (7) is arranged in a first position in which an element (13) configured in the manner of a hollow cylinder with wing-like extensions (14) is arranged in a correspondingly shaped recess (19) of the retaining element (4) of the vehicle seat (1), wherein retaining tabs (15) of a sleeve (9) of the attachment element (7) bear against a retaining element (4) of the vehicle seat (1).

8. The method as claimed in claim 7, **characterized in that** after the arrangement of the vehicle seat (1) in the vehicle, the attachment element (7) is displaced in the vehicle transverse direction toward the vehicle structure (2) into a second position until the attachment element (7) bears on its front face against the vehicle structure (2), wherein the element (13) configured in the manner of a hollow cylinder with the wing-like extensions (14) is moved completely out of the recess (19) of the retaining element (4) of the vehicle seat (1) so that the recess (19) is located in the intermediate space (17) between the lever element (7) and the element (13) configured in the manner of a hollow cylinder and the lever element (10) bears at least partially against the retaining element (4) of the vehicle seat (1).

9. The method as claimed in claim 8, **characterized in that** the attachment element (7) is rotated from the second position by means of the lever element (10) manually or automatically into a third position, wherein the wing-like extensions (14) bear at the end face against the retaining element (4) of the vehicle seat (1), so that a return movement of the attachment element (7) in the vehicle transverse direction is prevented.

## Revendications

1. Élément de fixation (7) pour le montage d'un siège de véhicule (1) sur une structure de véhicule (2), comprenant une douille (9) sur l'une des extrémités de laquelle est placé un élément de levage (10), et un élément (13) conçu sensiblement sous la forme d'un cylindre creux, lequel entoure la douille (9) au moins par tronçon, **caractérisé en ce que** l'élément (13) conçu sous la forme d'un cylindre creux comprend au moins deux élargissements opposés en forme d'ailettes et est maintenu par complémentarité de forme et/ou de force sur la douille (9) à l'aide d'au moins deux pattes de retenue (15) mutuellement opposées, de sorte que pendant la disposition ou le montage du siège de véhicule (1) dans le véhicule, l'élément de fixation (7) puisse être placé dans une première position dans laquelle l'élément (13) conçu sous la forme d'un cylindre creux avec les élargissements (14) en forme d'ailettes puisse être placé dans un évidement (19) façonné en correspondance d'un élément de retenue (4) du siège de véhicule (1), des pattes de retenue (15) d'une douille (9) de l'élément de fixation (7) étant adjacentes à un élément de retenue (4) du siège de véhicule (1).

2. Élément de fixation (7) selon la revendication 1, **caractérisé en ce que** les pattes de retenue (15) sont rapportées ou façonnées sur la face frontale de la douille (9) et sont recourbées vers l'extérieur sous un angle de 90 degrés ou d'approximativement 90 degrés par rapport à l'axe de la douille.

3. Élément de fixation (7) selon l'une quelconque des revendications précédentes, **caractérisé en ce que** les pattes de retenue (15) s'engagent par complémentarité de forme dans des évidements (16) correspondants dans l'élément (13) conçu en forme de cylindre creux et saillissent sur la face extérieure par-dessus l'élément (13).

4. Élément de fixation (7) selon l'une quelconque des revendications précédentes, **caractérisé en ce qu'**entre l'élément de levage (10) et l'élément (13) conçu en forme de cylindre creux est conçu un espace intermédiaire (17) qui est conçu en correspondance avec une épaisseur de matière d'un élément de retenue (4) du siège de véhicule (1).

5. Élément de fixation (7) selon l'une quelconque des revendications précédentes, **caractérisé en ce que** pour la disposition par complémentarité de forme et/ou de force de l'élément de levage (10) sur la douille (9), des tronçons (12) sont rapportés ou façonnés sur l'une des extrémités de la douille (9) et sont coudés vers l'extérieur sous un angle de 90 degrés ou d'approximativement 90 degrés par rapport à une axe de la douille.

6. Élément de fixation (7) selon l'une quelconque des revendications précédentes, **caractérisé en ce que** l'élément de levage (10) est conçu sensiblement sous la forme d'un disque et comporte sur la périphérie extérieure un élargissement (11) de type levier.

7. Procédé destiné au montage d'un siège de véhicule (1) sur une structure de véhicule (2) à l'aide d'au moins un élément de fixation (7) selon l'une quelconque des revendications 1 à 6,
**caractérisé en ce que** pendant la disposition ou le montage du siège de véhicule (1) dans le véhicule, on place l'élément de fixation (7) dans une première position dans laquelle un élément (13) conçu sous la forme d'un cylindre creux avec des élargissements (14) en forme d'ailettes est placé dans un évidement (19) façonné en correspondance de l'élément de retenue (4) du siège de véhicule (1), des pattes de retenue (15) d'une douille (9) de l'élément de fixation (7) étant adjacentes à un élément de retenue (4) du siège de véhicule (1).

8. Procédé selon la revendication 7,
**caractérisé en ce qu'**après la disposition du siège de véhicule (1) dans le véhicule, on repousse l'élément de fixation (7) dans une deuxième position dans la direction transversale du véhicule vers la structure de véhicule (2), jusqu'à ce que l'élément de fixation (7) soit adjacent côté frontal à la structure de véhicule (2), l'élément (13) conçu sous la forme d'un cylindre creux avec les élargissements (14) en forme d'ailettes étant déplacé entièrement hors de l'évidement (19) de l'élément de retenue (4) du siège de véhicule (1), de sorte que l'évidement (19) se trouve dans l'espace intermédiaire (17) entre l'élément de levage (7) et l'élément (13) conçu sous la forme d'un cylindre creux et l'élément de levage (10) soit adjacent au moins par tronçons à l'élément de retenue (4) du siège de véhicule (1).

9. Procédé selon la revendication 8, **caractérisé en ce qu'**on fait tourner manuellement ou automatiquement l'élément de fixation (7) hors de la deuxième position à l'aide de l'élément à levier (10) dans une troisième position, les élargissements (14) en forme d'ailettes étant adjacents du côté extrémité à l'élément de retenue (4) du siège de véhicule (1), de sorte qu'un déplacement en retour de l'élément de fixation (7) dans la direction transversale du véhicule soit empêché.
